# EUROPEAN PATENT SPECIFICATION

(11) **EP 3 805 099 B1**
(45) Date of publication and mention of the grant of the patent: **06.04.2022**
(21) Application number: 20200454.5
(22) Date of filing: 07.10.2020
(51) Int. Cl.: B64C 25/56

(54) **EMERGENCY LANDING DEVICE**
NOTLANDEVORRICHTUNG
DISPOSITIF D'ATTERRISSAGE D'URGENCE

(30) Priority: 09.10.2019 PL 43142519
(43) Date of publication of application: 14.04.2021
(73) Proprietor: Instytut Podstawowych Problemów Techniki Polskiej Akademii Nauk, 02-106 Warszawa (PL)
(72) Inventor: Faraj, Rami, 02-603 Warsaw (PL); Holnicki-Szulc, Jan, 02-502 Warsaw (PL); Kowalski, Tomasz Marcin, 01-618 Warsaw (PL); Wolejsza, Zbigniew, 02-760 Warsaw (PL); Mikulowski, Grzegorz, 02-787 Warsaw (PL); Pawlowski, Piotr, 01-565 Warsaw (PL); Hinc, Krzysztof, 05-110 Jablonna (PL); Graczykowski, Cezary, 01-756 Warsaw (PL)
(74) Representative: Grzelak, Anna

(56) References cited:
- WO-A1-2014/080409
- JP-A- 2018 127 070
- KR-B1- 101 558 178
- US-B1- 9 452 843

## Description

The subject of the invention is an adaptive emergency landing device for a flying object, especially for an unmanned aerial vehicle, which can also be used to protect manned aeroplanes and other flying objects.

Despite application of modern safety systems, airplanes crashes and accidents can be fatal. Therefore, further improvement of the reliability of aerial vehicle systems and additional safety systems still constitutes a significant technical problem and is the subject of intense scientific research.

The Russian document RU2089453 C1 makes known a system for the emergency landing of aerial vehicles on water by means of inflatable floats and pressure accumulators. Wherein the disclosed floats are attached to the pressure accumulators which are installed on board of the aerial vehicle and can rotate around its longitudinal axis.

The RU2123454 C1 document makes known a module for the emergency landing of an aerial vehicle, which contains an inflatable float placed on the pressure accumulator mounted on aerial vehicle supports with the ability to rotate around its longitudinal axis. To ensure the rotation of the float towards the surface of the aerial vehicle, the disclosed module is equipped with the pressure accumulator's rotation limiter in the form of a ratchet wheel interacting with a ratchet attached to the aerial vehicle support.

Unmanned aerial vehicles (*UAV*) flights take place at relatively low altitudes, mostly outside the controlled areas of airports. Due to the high risk of collisions with various types of structures and in-flight breakdowns, it is necessary to ensure protection of the aerial vehicle structure as well as the cargo and equipment it carries.

Different types of collision protection and fall mitigating measures for unmanned aerial vehicles are known from the state of the art.

The LV15183 A document makes known a system for emergency landing of unmanned aerial vehicles, enabling them to land on water, consisting of three inflatable buffer devices installed and closed by hatches in the airframe compartments. Wherein the said buffer devices are connected by tubes with an electromagnetic valve connected to a micro-balloon filled with pressurized air. In the event of an accident, after receiving a signal from the aerial vehicle system, the control module opens the solenoid valve and hatch covers of the device and the buffer devices are filled with air, which mitigates the effects of landing on water and improves buoyancy.

The PL218866 B1 document makes known a device compensating the effects of violent touchdowns of unmanned aerial vehicles, characterized in that it consists of a spring of several coils with one arm, bent upwards in the end section, ending in an arched bend set in the groove of the cube attached to the aerial vehicle and, at the other end, the other arm ending with a bend, whereas the α angle between the arms is from 30 to 80° or from 100 to 160°.

The KR101558178B1 document makes known a device based on a set of airbags, protecting both the unmanned aerial vehicle and the image recording system mounted on the underside. The set of airbags consists of several modules that are deployed in the event of a failure below the aerial vehicle, on its sides and above the aerial vehicle, respectively. In addition, the device includes a fall detection module, preferably configured as an acceleration sensor to measure the acceleration of the said aerial vehicle.

The JP2018127070 A document makes known an aerial vehicle airbag device designed to mitigate the impact during its fall, with the airbag attached to the aerial vehicle having at least one opening to which at least one fan is connected in order to supply external air to the said airbag. The disclosed device is characterized by the airbag inflator system which is powered when the aerial vehicle falls. Preferably, the power source of the device is independent of the aerial vehicle power source, e.g. an additional battery. Preferably, the disclosed device additionally contains one or more suction pipes that supply air from outside to the airbag. Favourably, there are one or more vents in the airbag. In addition, the device incorporates an expandable supporting element, both ends of which are adequately connected to the interior of the airbag. Whereas, the supporting element in its initial state is folded and its deployment results in an airbag being unfolded during the descent of the aerial vehicle. The device preferably includes an additional component which maintains the shape of at least part of the airbag after it has been inflated. Preferably, the device also contains a gas generator.

JP 2018 127070A describes the foldable and expandable from the airbag device for an aircraft for buffering dropping shock of the aircraft.

KR 101 558 178B1 describes the airbag system for protection of the unmanned air vehicle and the filming device when the unmanned air vehicle falls. The airbags are formed to be expanded when a falling of unmanned air vehicle is detected. The expanded airbag comes into contact with a horizontal plane before the unmanned air vehicle and the filming device comes into contact with the same, even if the unmanned air vehicle falls in any position.

WO2014/080409A1 describes safety apparatus for a multi-blade aircraft, comprising an expandable and collapsible parachute to prevent damage to people and structures in the surroundings when multi-blade aircraft loses its ability to be controlled during flight and crashes.

US 9452843B1 describes aircraft inflation system including an airbag mounted on an external surface of an aircraft. The system also includes controller and multiple sensors disposed on-board the aircraft and configured to sense aircraft velocities and an aircraft attitude and to determine a crash event for the aircraft and determine a stage at which the airbag is to be inflated based on the crash event.

The solutions available on the current market increase the level of safety, but do not guarantee full effectiveness of a safe touchdown of an aerial vehicle in an emergency situation. The purpose of this invention is to provide the means for stable landing of unmanned aerial vehicles with simultaneous protection of their construction and equipment. It should be noted that the invention presented in this application can also be used to protect manned aerial vehicles and other flying objects.

The subject of the invention is an adaptive emergency landing device for a flying object, especially for unmanned aerial vehicles, containing an airbag with at least one pre-cut vent opening, an airbag inflation module containing at least one fan drive, gas discharge activation module, failure detection module, power source, and ground proximity detection module the landing device contains a pyrotechnic charge together with a detonator placed on an airbag shell within the pre-cut vent opening, connected to a detonator module, wherein the adaptive emergency landing device contains mechanical stabilisers for the spatial orientation of the flying object located above the airbag, extending outwards from the flying object during the emergency landing process in the horizontal plane or at an angle to the horizontal plane, and wherein the mechanical stabilizers are in the form of a rolled up roll, concertina fold or other form enabling compact folding and quick unfolding of the stabilizers.

Preferably, the device has a power supply independent of the flying object's power supply.

Preferably, when the flying object has number of arms in its horizontal cross-section the airbag is shaped like a rosette with the number of arms equal to the number of arms of the flying object.

Preferably, the failure detection module of the flying object consists of at least one accelerometer and/or at least one gyroscope and/or has at least one altimeter.

Preferably, the airbag inflation module consists of at least one fan drive, which consists of a rotor powered by a high-speed electric motor.

Preferably, the detonator module is a device selected from a group including a transistor module, a relay module, a mechanical gravity switch or a module based on a semiconductor diode.

Preferably, the ground proximity detection module includes at least one of the following sensors: a sensor for contactless relative distance measurement, a direct contact sensor.

The sensor for contactless relative distance measurement is preferably a device selected from a group that includes a reflective rangefinder in particular, an ultrasonic sensor, a laser or infrared optical sensor, a radar sensor.

The direct contact sensor is preferably a piezo-electric deformation sensor or a mechanical ground contact sensor.

Preferably, the ground proximity detection module is placed on a boom of the adaptive device. Favourably, the boom is made of a released cord, a decoiling wire, or an deployable telescopic rod, or an extendable telescopic tube.

Preferably the adaptive device includes at least one of the following modules: a ground type detection module, a radio communication module.

This invention provides the following advantages:
- stable touchdown of an unmanned aerial vehicle in appropriate spatial orientation after an emergency situation,
- effective mitigation of the consequences of an impact accompanying a touchdown after a failure,
- adaptation to the impact conditions by activating full discharge of gas through a selected number of vent holes based on prediction of the impact conditions.

The invention is shown in Figures, where fig. 1 shows schematically the aerial vehicle with the emergency landing device 2, fig. 2 and 3 present the main components of the emergency landing device before the aerial vehicle failure is detected for two examples of mechanical stabilisers, fig. 4 presents the main components of the emergency landing device after detection of aerial vehicle failure and deployment of mechanical stabilisers and inflation of the airbag 4, fig 5 shows the main components of the emergency landing device when the proximity of the ground is detected and the middle part of the vent holes is blown, fig. 6 shows a schematic representation of the aerial vehicle together with the emergency landing device for the example of using the invention to protect an aeroplane.

### Embodiment 1

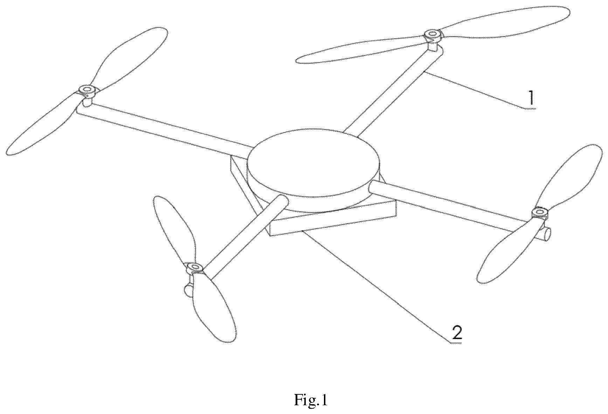

Application of the device according to the invention in a drone (fig. 1).

The essence of the invention is that protected flying object 1, in particular an unmanned aerial vehicle, is equipped with an adaptive emergency landing device 2, which includes: a failure detection module 3, an airbag 4, an inflation module 5 for the airbag 4, gas vent activation module 6, mechanical stabilizers 7 of the spatial orientation of the flying object 1 and ground proximity detection module 8. Stabilizers 7 of the spatial orientation of the flying object 1 are extendible.

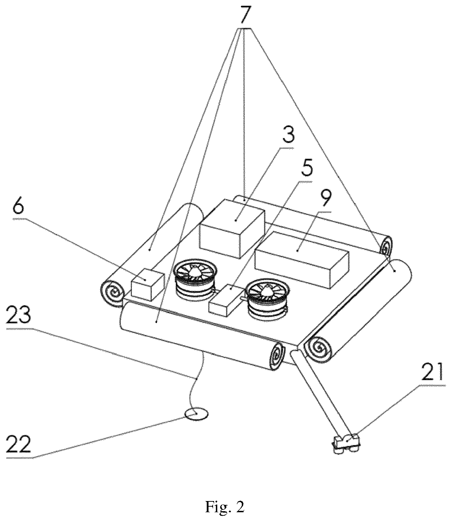

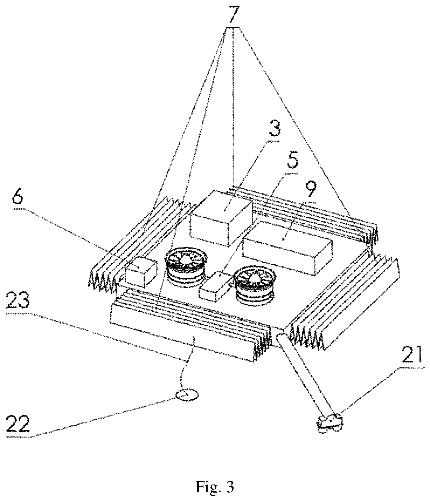

They are in the form of a rolled up roll (fig. 2), a concertina fold (fig. 3), or any other form enabling compact assembly and rapid deployment of stabilisers 7. Moreover, the adaptive device 2 has a power source 9, which is independent of the power supply of the flying object 1. Optionally, the adaptive device 2 can be equipped with a ground type detection module 24. The ground type detection module 24 is based in particular on reflective sensors and/or an image processing module analysing the image from one or several cameras (e.g. thermal imaging ones). The flying object 1 failure detection module 3 is based on inertial sensors, preferably on at least one accelerometer 10 and/or at least one gyroscope 11 and/or an altimeter 12.

As an altimeter 12, a barometric sensor and/or a laser-lidar sensor can be used. In addition, the failure detection module 3 is connected with flying object 1 via the communication interface 13. If the established threshold of linear acceleration in vertical direction, angular velocity or angular acceleration in any direction is exceeded, the fault detection module 3 sends a signal to switch off the power supply of the drives of flying object 1, resulting in a free fall of the flying object 1.

Disconnection of power supply from the protected 1 is a favourable embodiment, but in other embodiments it is also acceptable not to disconnect the power supply of the protected flying object 1.

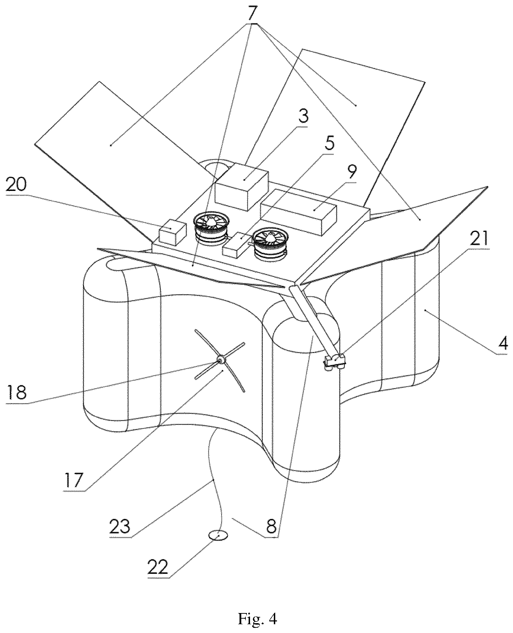

Then mechanical stabilizers 7 are extended and airbag 4 is filled using the filling module 5. The airbag 4 inflation module 5 consists of at least one fan drive 14, which consists of a rotor 15 powered by a high-speed, brushless electric motor 16. The airbag 4 is shaped in its horizontal cross-section like a rosette with the number of arms equal to the number of arms of the drone. Depending on the drone type and its number of arms, the airbag takes the shape that matches the drone structure. The airbag 4, has at least one incised vent hole 17, the middle part of which is not cut. Favourably, there are at least two vent holes 17, which allows the gas discharge to be adapted to different impact conditions. The vent holes 17 are located on the side surface of the airbag 4 (fig. 4). On the central part of the pre-cut vent holes 17 there is a small pyrotechnic charge 18 together with a detonator 19. Parts 17, 18 and 19 together with the detonator module 20 constitute the gas vent activation module 6.

For example, a transistor module 20a, a relay module 20b, a mechanical gravity switch 20c or a module based on a semiconductor diode 20d can be used as a detonator module 20.

The ground proximity detection module 8 can be duplicated and can contain two types of sensors: the first one for contactless measurement of relative distance 21 (e.g. a reflective rangefinder such as an ultrasound sensor 21a, infrared reflective sensor 21b, laser reflective sensor 21c, radar reflective sensor 21d), the second one based on a direct contact sensor 22 (e.g. a piezoelectric deformation sensor 22a, mechanical contact sensor 22b) placed on a boom 23. For example, the boom can have the form of a released cord 23a, decoiling wire 23b, an deployable telescopic rod 23c, an extendable telescopic tube 23d.

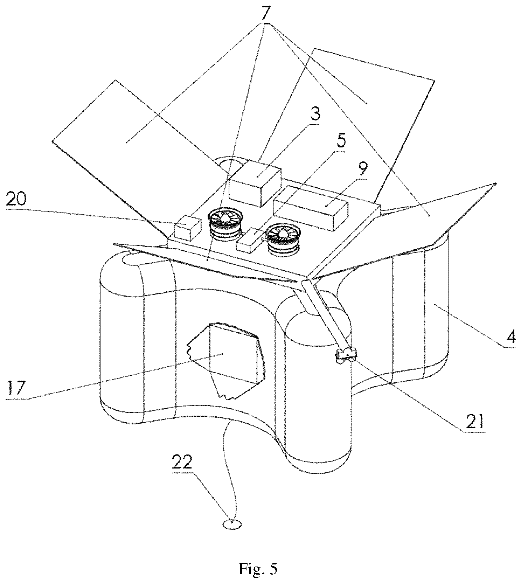

After obtaining a measurement of altitude in relation to the ground within a fixed range, the first sensor 21, sends a control signal to the detonator module 20, resulting in burning of the uncut central part of vent holes 17 and, as a result, activation of full air venting through vent holes 17 (fig. 5), whereby the number of burnt vent holes is selected on the basis of data from the failure detection module 3, which records the altitude at which the failure occurred. Independently, a second, direct contact sensor 22 also sends a control signal to the detonation module 20 upon contact with the ground. Sensors 21 and 22 are independent in order to provide redundancy. If one of the sensors is not triggered, their doubling increases the probability of correct ground proximity detection and the activation of full gas release just above the ground.

Preferably, device 2 has an additional radio communication module 25, which enables independent activation of device 2 by the operator of the protected flying object 1. In this case, the signal sent by the operator replaces the signal issued by the fault detection module 3. Preferably, the radio communication module 25 is independent of the radio communication module of flying object 1, and therefore allows the activation of the emergency landing device 2, e.g. when communication with flying object 1 is not working.

### Example 2

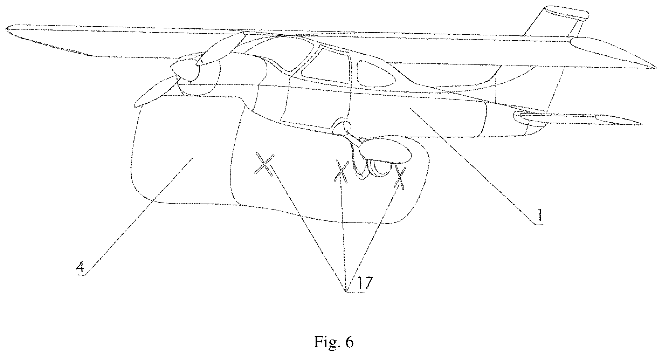

Application of the device according to an unclaimed example in an airplane When the protected flying object 1 is an aeroplane (unmanned or crewed) (fig. 6), the adaptive emergency landing device 2 and its mode of operation remain analogous to the first embodiment, except that stabilisers 7 are not used (device 2 is not equipped with them and optionally the protected flying object 1 is equipped with a parachute, which is not the subject of this patent description). The operating sequence of the subsequent modules of device 2 remains unchanged. In addition, it is still possible to remotely activate device 2 using a radio communication module 25, but in addition, the pilot of the protected flying object 1 (i.e. in the case of an airplane, a helicopter or other manned aerial vehicle) can activate device 2 (e.g. by pressing a button, repositioning a slider, switching a lever, etc.).

The embodiments of an adaptive emergency landing device for a flying object, especially for unmanned aerial vehicles, are given only as a non-restrictive indication of the invention and may not in any way limit the scope of protection which is determined by patent claims.

## Claims

1. An adaptive emergency landing device for a flying object, especially for an unmanned aerial vehicle, containing an airbag with at least one pre-cut vent opening, an airbag inflation module containing at least one fan drive, gas discharge activation module, failure detection module, power source, and ground proximity detection module, the landing device containing a pyrotechnic charge (18) together with a detonator (19) placed on an airbag (4) shell within the pre-cut vent opening (17), connected to a detonator module (20), **characterized in that** the adaptive emergency landing device contains mechanical stabilisers (7) for the spatial orientation of the flying object (1) located above the airbag (4), extending outwards from the flying object (1) in the horizontal plane or at an angle to the horizontal plane during the emergency landing process, wherein the mechanical stabilizers (7) are in the form of a rolled up roll, concertina fold or other form enabling compact folding and quick unfolding.

2. The adaptive device according to claim 1 **characterized in that** it has a power source (9), independent of power supply of the flying object (1).

3. The adaptive device according to claim 1 or 2 **characterized in that,** when the flying object (1) has number of arms the airbag (4) is shaped in its horizontal cross-section like a rosette with the number of arms equal to the number of arms of the flying object (1).

4. The adaptive device according to any of the earlier claims 1-3, **characterized in that** the failure detection module (3) of flying object (1) consists of at least one accelerometer (10) and/or at least one gyroscope (11) and/or has at least one altimeter (12).

5. The adaptive device according to any of the earlier claims 1-4, **characterized in that** the airbag (4) inflation module (5) consists of at least one fan drive (14), which consists of a rotor (15) powered by a high-speed electric motor (16).

6. The adaptive device according to any of the previous claims 1-5, **characterized in that** the detonator module (20) is a device selected from a group including a transistor module (20a), relay module (20b), mechanical gravity switch (20c) or a module based on a semiconductor diode (20d).

7. The adaptive device according to any of the previous claims 1-6, **characterized in that** the ground proximity detection module (8) contains at least one of the following sensors: a sensor for contactless relative distance measurement (21), a direct contact sensor (22).

8. The adaptive device according to claim 7, **characterized in that** the contactless relative distance measurement sensor (21) is a device selected from a group that includes a reflective rangefinder, in particular an ultrasonic sensor (21a), an infrared reflective sensor (21b), a laser reflective sensor (21c), a radar reflective sensor (21d).

9. The adaptive device according to claim 7 or 8, **characterized in that** the direct contact sensor (22) is a piezoelectric deformation sensor (22a) or a mechanical contact sensor (22b).

10. The adaptive device according to any of the previous claims 1-9, **characterized in that** the ground proximity detection module (8) is placed on a boom (23) of the adaptive device (2), wherein preferably the boom is made of a released cord (23a), a decoiling wire (23b), or a deployable telescopic rod (23c), or an extendable telescopic tube (23d).

11. The adaptive device according to any of the previous claims 1-10, **characterized in that** it contains at least one of the following modules: a ground type detection module (24), a radio communication module (25).

## Patentansprüche

1. Eine adaptive Notlandevorrichtung für ein Flugobjekt, insbesondere für ein unbemanntes Luftfahrzeug, enthaltend einen Airbag mit mindestens einer vorgeschnittenen Entlüftungsöffnung, ein Airbagaufblasmodul mit mindestens einem Gebläseantrieb, ein Gasentladungsaktivierungsmodul, ein Fehlererkennungsmodul, eine Versorgungsquelle und ein Bodennäherkennungsmodul, eine Landevorrichtung enthaltend eine pyrotechnische Ladung (18) zusammen mit einem Zünder (19) auf einer Airbag-Hülle (4) innerhalb der vorgeschnittenen Entlüftungsöffnung (17), an einem Zündermodul (20) angeschlossen, **dadurch gekennzeichnet, dass** die adaptive Notlandevorrichtung mechanische Stabilisatoren (7) zur räumlichen Ausrichtung des Flugobjekts (1) oberhalb des Airbags (4) enthält, die während des Notlandevorgangs in der horizontalen Ebene oder unter einem Winkel zur horizontalen Ebene vom Flugobjekt (1) ausfahren, wobei die mechanischen Stabilisatoren (7) in Form einer aufgerollten Rolle, einer Ziehharmonikafalte oder einer anderen Form vorliegen, die ein kompaktes Zusammenfalten und schnelles Entfalten ermöglicht.

2. Die adaptive Vorrichtung nach Anspruch 1, **dadurch gekennzeichnet, dass** sie eine von der Versorgungsquelle des Flugobjekts (1) unabhängige Versorgungsquelle (9) besitzt.

3. Die adaptive Vorrichtung nach Anspruch 1 oder 2, **dadurch gekennzeichnet, dass**, wenn das Flugobjekt (1) eine Anzahl von Armen hat, der Airbag (4) in seinem horizontalen Querschnitt wie eine Rosette geformt ist, wobei die Anzahl ihrer Arme gleich der Anzahl der Arme des Flugobjekts (1) ist.

4. Die adaptive Vorrichtung nach einem der vorhergehenden Ansprüche 1 bis 3, **dadurch gekennzeichnet, dass** das Fehlererkennungsmodul (3) des Flugobjekts (1) aus mindestens einem Beschleunigungsmesser (10) und/oder mindestens einem Gyroskop (11) besteht und/oder mindestens einen Höhenmesser (12) besitzt.

5. Die adaptive Vorrichtung nach einem der vorhergehenden Ansprüche 1-4, **dadurch gekennzeichnet, dass** das Aufblasmodul (5) des Airbags (4) aus mindestens einem Gebläseantrieb (14) besteht, der aus einem Rotor (15) besteht, der von einem schnelllaufenden Elektromotor (16) angetrieben wird.

6. Die adaptive Vorrichtung nach einem der vorhergehenden Ansprüche 1-5, **dadurch gekennzeichnet, dass** das Zündermodul (20) eine Vorrichtung ist, die aus einer Gruppe ausgewählt wird, die ein Transistormodul (20a), ein Relaismodul (20b), einen mechanischen Schwerkraftschalter (20c) oder ein Modul auf der Basis einer Halbleiterdiode (20d) umfasst.

7. Die adaptive Vorrichtung nach einem der vorhergehenden Ansprüche 1-6, **dadurch gekennzeichnet, dass** das Modul (8) zur Erfassung der Bodennähe mindestens einen der folgenden Sensoren enthält: einen Sensor zur berührungslosen relativen Abstandsmessung (21), einen Sensor zur direkten Kontaktmessung (22).

8. Die adaptive Vorrichtung nach Anspruch 7, **dadurch gekennzeichnet, dass** der Sensor zur berührungslosen relativen Abstandsmessung (21) eine Vorrichtung ist, die aus einer Gruppe ausgewählt wird, die einen reflektierenden Entfernungsmesser umfasst, insbesondere einen Ultraschallsensor (21a), einen Infrarot-Reflexionssensor (21b), einen Laser-Reflexionssensor (21c), einen Radar-Reflexionssensor (21d).

9. Die adaptive Vorrichtung nach Anspruch 7 oder 8, **dadurch gekennzeichnet, dass** der direkte Kontaktsensor (22) ein piezoelektrischer Verformungssensor (22a) oder ein mechanischer Kontaktsensor (22b) ist.

10. Die adaptive Vorrichtung nach einem der vorhergehenden Ansprüche 1 bis 9, **dadurch gekennzeichnet, dass** das Modul (8) zur Erfassung der Bodennähe an einem Ausleger (23) der adaptiven Vorrichtung (2) angeordnet ist, wobei vorzugsweise der Ausleger aus einer ausgelösten Schnur (23a), einem Abwickeldraht (23b) oder einer ausfahrbaren Teleskopstange (23c) oder einem ausfahrbaren Teleskoprohr (23d) besteht.

11. Die adaptive Vorrichtung nach einem der vorhergehenden Ansprüche 1-10, **dadurch gekennzeichnet, dass** sie mindestens eines der folgenden Module enthält: ein Bodentyp-Erfassungsmodul (24), ein Funkkommunikationsmodul (25).

## Revendications

1. Dispositif d'atterrissage d'urgence adaptatif pour un objet volant, en particulier pour un véhicule aérien sans pilote, contenant un airbag avec au moins une ouverture d'aération prédécoupée, un module de gonflage d'airbag contenant au moins un entraînement de ventilateur, un module d'activation de décharge de gaz, un module de détection de panne, source d'énergie et module de détection de proximité du sol, le dispositif d'atterrissage contenant une charge pyrotechnique (18) ainsi qu'un détonateur (19) placé sur une coque d'airbag (4) à l'intérieur de l'ouverture d'aération prédécoupée (17), relié à un module détonateur (20), **caractérisé en ce que** le dispositif d'atterrissage d' urgence adaptatif contient des stabilisateurs mécaniques (7) pour l'orientation spatiale de l'objet volant (1) situé au-dessus de l'airbag (4), s'étendant vers l'extérieur depuis l'objet volant (1) dans le plan horizontal ou à un angle par rapport au plan horizontal pendant le processus d'atterrissage d'urgence, dans lequel les stabilisateurs mécaniques (7) se présentent sous la forme d'un rouleau enroulé, d'un pli en accordéon ou d'une autre forme permettant un pliage compact et une ouverture rapide.

2. Dispositif adaptatif selon la revendication 1, **caractérisé en ce qu'**il comporte une source d'alimentation (9), indépendante de l'alimentation de l'objet volant (1).

3. Dispositif adaptatif selon la revendication 1 ou 2, **caractérisé en ce que,** lorsque l'objet volant (1) a un certain nombre de bras, le coussin gonflable (4) est conformé dans sa section horizontale comme une rosette avec le nombre de bras égal au nombre de bras de l'objet volant (1).

4. Dispositif adaptatif selon l'une quelconque des revendications précédentes 1 à 3, **caractérisé en ce que** le module de détection de panne (3) de l'objet volant (1) consiste en au moins un accéléromètre (10) et/ou au moins un gyroscope (11) et /ou comporte au moins un altimètre (12).

5. Dispositif adaptatif selon l'une quelconque des revendications précédentes 1 à 4, **caractérisé en ce que** le module de gonflage d'airbag (4) (5) consiste en au moins un entraînement de ventilateur (14), qui consiste en un rotor (15) alimenté par un moteur électrique à vitesse rapide (16).

6. Dispositif adaptatif selon l'une quelconque des revendications précédentes 1 à 5, **caractérisé en ce que** le module détonateur (20) est un dispositif sélectionné dans un groupe comprenant un module transistor (20a), un module relais (20b), un interrupteur mécanique à gravité (20c) ou un module basé sur une diode à semi-conducteur (20d).

7. Dispositif adaptatif selon l'une quelconque des revendications précédentes 1 à 6, **caractérisé en ce que** le module de détection de proximité du sol (8) contient au moins l'un des capteurs suivants : un capteur de mesure de distance relative sans contact (21), un capteur à contact direct (22).

8. Dispositif adaptatif selon la revendication 7, **caractérisé en ce que** le capteur de mesure de distance relative sans contact (21) est un dispositif choisi dans un groupe comprenant un télémètre à réflexion, notamment un capteur à ultrasons (21a), un capteur à réflexion infrarouge (21b), un capteur réfléchissant laser (21c), un capteur réfléchissant radar (21d).

9. Dispositif adaptatif selon la revendication 7 et 8, **caractérisé en ce que** le capteur à contact direct (22) est un capteur de déformation piézoélectrique (22a) ou un capteur à contact mécanique (22b).

10. Dispositif adaptatif selon l'une quelconque des revendications précédentes 1 à 9, **caractérisé en ce que** le module de détection de proximité du sol (8) est placé sur une partie (23) du dispositif adaptatif (2), dans lequel celle-ci est constituée d'un cordon libre (23a), un fil de déroulage (23b), ou une tige télescopique déployable (23c), ou un tube télescopique extensible (23d).

11. Dispositif adaptatif selon l'une quelconque des revendications précédentes 1 à 10, **caractérisé en ce qu'**il contient au moins l'un des modules suivants : un module de détection de type sol (24), un module de communication radio (25).
